# DEMANDE DE BREVET EUROPEEN

(11) **EP 0 847 212 A1**
(43) Date de publication de la demande: **10.06.1998**
(21) Numéro de dépôt: 97203682.6
(22) Date de dépôt: 25.11.1997
(51) Int. Cl.: H04Q 7/32, H04Q 7/22

(54) **Appareil téléphonique et système de communication pour la réception de signaux codés**

(30) Priorité: 06.12.1996 FR 9615051
(71) Demandeur: Philips Electronics N.V., 5621 BA Eindhoven (NL)
(72) Inventeur: Bourhis, Stéven, 75008 Paris (FR)
(74) Mandataire: Landousy, Christian

(57) **Abrégé**

L'invention concerne, dans un appareil téléphonique, un étage de réception permettant de recevoir et décoder des signaux codés distincts des signaux de parole, pour les acheminer vers une zone de mémoire. Cette solution permet un transfert simple et automatique d'informations du correspondant vers la mémoire de l'appareil de l'utilisateur.

## Description

L'invention concerne un appareil téléphonique comprenant au moins un étage de réception de signaux d'appel et de signaux de parole, un haut-parleur de restitution d'informations sonores correspondant auxdits signaux de parole reçus, un clavier à touches pour la composition de numéros d'appel, un microphone, et un étage d'émission de signaux d' appel et de signaux de parole correspondant à des informations sonores envoyées vers le microphone. Cette invention présente un intérêt particulier chaque fois que le clavier d'appel est situé sur le combiné et n'est donc visuellement accessible qu'en cessant l'écoute du correspondant.

L'invention concerne également un système de communication téléphonique composé :
- d'une part d'au moins deux appareils téléphoniques comprenant chacun un étage de réception de signaux d'appel et de signaux de parole, un haut-parleur de restitution d'informations sonores correspondant auxdits signaux de parole reçus, un clavier à touches pour la Composition de numéros d'appel, un microphone, et un étage d'émission de signaux d'appel et de signaux de parole correspondant à des informations sonores envoyées vers le microphone ;
- d'autre part d'un dispositif de commutation centrale pour l'établissement d'une connexion téléphonique bidirectionnelle entre lesdits appareils.

Sur un nombre croissant des équipements téléphoniques actuels, et essentiellement sur les téléphones mobiles, le "scratchpad", ou bloc-notes électronique, permet à l'utilisateur, en cours de conversation avec son correspondant, d'introduire des nombres en mémoire à partir du clavier, par exemple un numéro de téléphone qu'on veut ultérieurement réafficher sur l'écran pour appel d'un correspondant. Si ces nombres lui sont dictés, l'utilisateur doit, pour les mettre en mémoire, écouter, puis cesser d'écouter pour placer l'appareil devant lui et frapper sur le clavier les nombres qu'il a entendus, puis réécouter les nombres suivants, les introduire en mémoire à leur tour, et ainsi de suite, ce qui est évidemment défavorable à la continuité de la conversation. Celle-ci est également perturbée par le fait que, chaque fois que l'utilisateur frappe une touche du clavier, un signal sonore est émis, ce qui est désagréable pour le correspondant.

Un premier but de l'invention est de proposer un appareil téléphonique permettant de simplifier cette opération de transmission et de mémorisation d'information entre deux personnes en conversation.

A cet effet l'invention concerne un appareil tel que défini dans le préambule de la description et qui est en outre caractérisé en ce qu'il comprend également un étage de réception de signaux codés distincts des signaux de parole reçus par un utilisateur pendant une liaison téléphonique avec au moins un correspondant, suivi de moyens de mémorisation de l'information correspondant auxdits signaux codés.

Grâce au dispositif utilisé, entièrement localisé sur l'appareil téléphonique de l'utilisateur appelé, une solution simple et automatique est ainsi proposée pour faciliter le transfert d'informations telles que numéros de téléphone ou autres indications codées entre deux personnes engagées dans une même communication. En effet le correspondant n'a plus à dicter ladite information à transmettre, ni l'utilisateur appelé à composer au clavier, pour la mettre en mémoire, l'information ainsi reçue.

L'invention proposée est applicable quel que soit le type de réseau téléphonique. Par exemple, avec un appareil téléphonique prévu pour les réseaux analogiques (filaire, sans fil, cellulaire analogique), lesdits signaux codés sont des signaux DTMF (de l'anglais Dual Tone Multiple Frequency ; ces tonalités sont conformes à la recommandation Q23) multiplexés avec lesdits signaux de parole et l'étage de réception de signaux codés est équipé d'un circuit de décodage desdits signaux DTMF, alors que, dans le cas d'un appareil conforme à une norme numérique, lesdits signaux codés sont des signaux numériques contenus dans des trames distinctes des trames numériques contenant les signaux de parole et ledit étage est équipé d'un circuit de décodage de signaux numériques. Dans l'un et l'autre cas, un microprocesseur, ou celui qu'incorpore l'appareil, commande l'envoi des signaux de sortie du circuit de décodage vers une mémoire interne (bloc-notes, ou écran d'affichage).

Dans deux modes particuliers de réalisation de l'appareil, celui-ci peut être équipé, sur le clavier, d'une touche supplémentaire, pour la neutralisation, ou au contraire pour l'activation, de l'étage de réception des signaux codés. Il est ainsi possible, pour l'utilisateur, de s'opposer, à volonté, au transfert d'information.

Un autre but de l'invention est de proposer un système de communication téléphonique incorporant au moins un appareil tel que décrit ci-dessus.

A cet effet l'invention concerne un système de communication téléphonique tel que défini dans le préambule de la description et qui est en outre caractérisé en ce que l'un au moins des appareils comprend également un étage de réception de signaux codés distincts des signaux de parole reçus pendant le temps de connexion téléphonique entre lesdits appareils, suivi de moyens de mémorisation de l'information correspondant auxdits signaux codés.

L'invention sera mieux comprise à l'aide de la description suivante et des dessins annexés, donnés à titre d'exemples non limitatifs et dans lesquels :
- la figure 1 montre la structure générale d'un appareil téléphonique selon l'état de la technique ;
- la figure 2 illustre la procédure d'établissement d'un appel téléphonique ;
- la figure 3 montre un exemple de réalisation d'un étage de réception d'appareil téléphonique permettant la mise en oeuvre de l'invention.

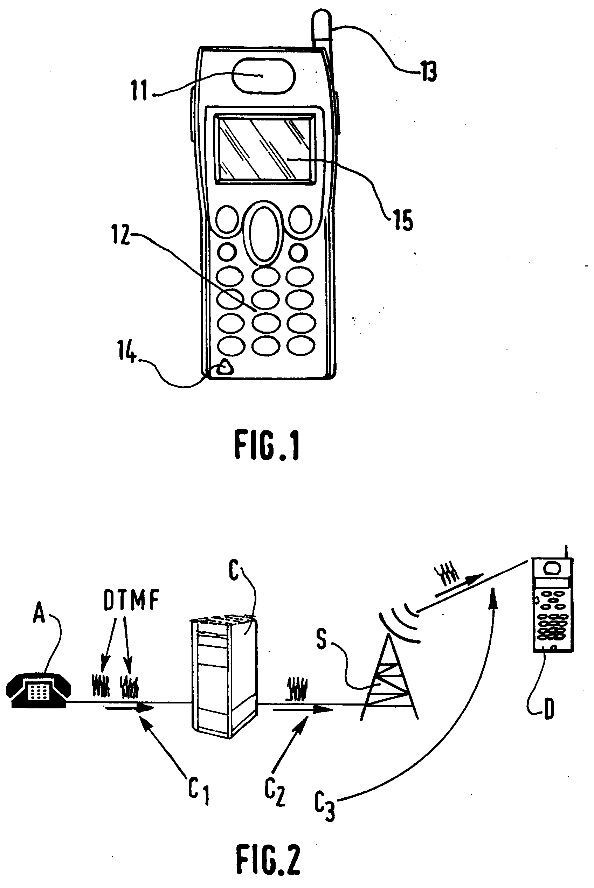

L'appareil téléphonique représenté sur la figure 1 dans un exemple particulier de réalisation est un téléphone mobile comprenant essentiellement un haut-parleur 11, un clavier 12, une antenne 13 et un microphone 14, ainsi qu'un écran 15. Le clavier 12 comporte au moins les douze touches habituelles d'un clavier téléphonique (touches 0 à 9, touches * et #). Cet appareil inclut également, pour permettre son fonctionnement, un microprocesseur, ainsi qu'une mémoire vive et une mémoire sauvegardée (par exemple de type EEPROM, en anglais Electrically Erasable Programmable Read-Only Memory).

La figure 2 permet de rappeler brièvement la procédure d'établissement d'un appel téléphonique. Un abonné A, relié (liaison C₁) à un central de commutation téléphonique C, veut appeler un correspondant D. Le central C détecte le décroché de A et lui adresse une tonalité d'invitation à numéroter. L'abonné compose le numéro du correspondant D, et chaque appui sur les touches du clavier déclenche l'émission d'une tonalité DTMF. Ces signaux DTMF sont analysés par le central, qui recherche alors la destination de l'appel et détermine vers quel autre central l'acheminer (soit le central du poste demandé, soit éventuellement un centre de transit), puis établit la connexion avec celui-ci. Cette connexion est schématiquement représentée sur la figure 2 par l'itinéraire (liaisons C₂, C₃) qui relie le central C au correspondant D, ici par l'intermédiaire d'une station intermédiaire S. La continuité de circuit ainsi établie permet aux signaux DTMF correspondant au numéro du correspondant D d'atteindre l'appareil téléphonique de celui-ci lorsqu'il décroche. La propagation de ces signaux est représentée sur la figure 2. Lorsque le correspondant a décroché, la conversation s'établit (après une éventuelle procédure d'authentification) et les signaux de parole circulent alors de façon bidirectionnelle entre l'abonné A et son correspondant D.

Il est fréquent, comme on l'a vu plus haut, qu'un utilisateur (ici, de l'appareil décrit sur la figure 1) et son correspondant aient à se communiquer par exemple un numéro de téléphone, ou toute autre information de caractère numérique. Conformément à l'invention, l'appareil téléphonique comprend alors un dispositif spécifique qui va prendre entièrement en charge ce transfert d'information, de la façon indiquée maintenant.

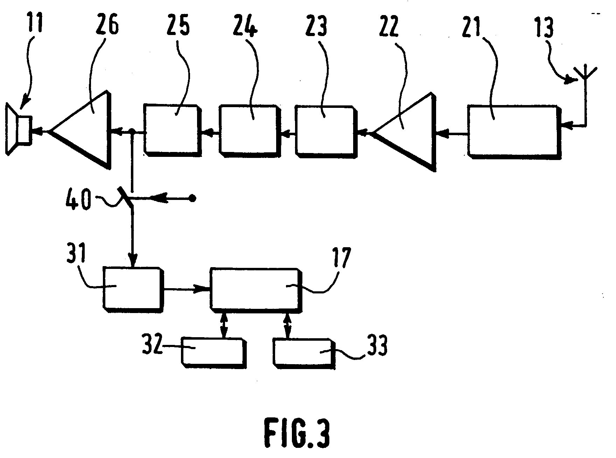

Comme le montre la figure 3, un appareil téléphonique tel que celui décrit ici comprend en effet, en plus des éléments cités plus haut, un étage de réception connecté entre l'antenne 13 et le haut-parleur 11. Cet étage comprend lui-même en série, de façon classique, dans le cas d'un appareil téléphonique cellulaire ou d'un appareil mobile sans fil, un circuit 21 de réception radio des signaux de parole, un premier amplificateur 22, un filtre passe-bande 23, un circuit de désaccentuation 24, un circuit de décompression 25 et un deuxième amplificateur 26. Le dispositif prévu dans l'appareil conformément à l'invention consiste en une structure supplémentaire, prévue sous la forme d'un étage de réception de signaux codés distincts des signaux de parole reçus pendant le temps de connexion téléphonique entre l'utilisateur et son correspondant (dans le cas présent, multiplexés avec eux). Cet étage, connecté en parallèle avec la voie comprenant le deuxième amplificateur 26 et le haut-parleur 11, comprend dans le cas présent un circuit 31 de décodage de signaux DTMF et un microprocesseur 17 (celui qui est déjà prévu dans l'appareil convient bien entendu), ainsi qu'un afficheur 32 et une mémoire 33 (l'afficheur peut être l'écran 15 ou une zone de cet écran, et la mémoire 33 peut être une zone de la mémoire déjà prévue dans l'appareil).

Le fonctionnement de l'étage est le suivant. Lorsque le correspondant souhaite par exemple transmettre à l'utilisateur de l'appareil ainsi équipé les n chiffres d'un numéro de téléphone, il appuie sur les touches correspondantes de son clavier et émet ainsi, pendant le temps de connexion, des signaux DTMF qui sont reçus et décodés par l'étage selon l'invention, puis dirigés, toujours sans intervention de l'utilisateur, vers une zone mémoire ou vers l'écran d'affichage. En prévoyant ainsi une structure d'étage capable de déceler dans les signaux reçus en provenance du correspondant des signaux codés spécifiques et de les transférer en mémoire, une simplification appréciable est apportée à la démarche expliquée plus haut, qui s'avérait plutôt fastidieuse du fait de la nécessaire intervention de l'utilisateur.

Bien entendu, l'invention n'est pas limitée à cet exemple de réalisation. En particulier, elle est également applicable à tout appareil téléphonique conforme à une norme numérique, par exemple à la norme GSM (Global System for Mobile communications) élaborée par l'ETSI (European Telecommunications Standards Institute) ou à la norme DECT (Digital Enhanced Cordless Telecommunications), qui constituent deux types de transmission téléphonique sans fil numérique. Par ailleurs, cette invention n'est pas seulement applicable à une conversation entre deux personnes, mais peut être mise en oeuvre dans les conversations à plusieurs. Dans cette situation, comme dans celle où l'utilisateur destinataire des signaux codés voudrait s'opposer pour une raison quelconque à l'envoi de ces signaux, une touche supplémentaire peut être prévue pour actionner l'ouverture d'un interrupteur, désigné par la référence 40 sur la figure 3. Cette commande permet de neutraliser l'étage de réception des signaux codés et donc d'empêcher le transfert automatique d'informations codées de l'appareil du correspondant vers la mémoire interne de l'appareil de l'utilisateur, ou d'en limiter le transfert à celui des utilisateurs qui accepte ce transfert ou auquel il est destiné. Inversement, et de façon équivalente à cette dernière solution, ladite touche supplémentaire peut être prévue pour activer, par fermeture d'un interrupteur, la mise en oeuvre de l'invention, celle-ci étant le reste du temps non connectée. Enfin, l'invention concerne aussi, bien entendu, tout système de communication téléphonique comprenant au moins deux appareils téléphoniques et un dispositif de commutation centrale pour l'établissement d'une connexion entre eux deux, et dont l'un au moins des appareils comprend également un étage de réception de signaux codés distincts des signaux de parole reçus pendant le temps de connexion téléphonique entre lesdits appareils, suivi de moyens de mémorisation de l'information correspondant auxdits signaux codés.

## Revendications

1. Appareil téléphonique comprenant au moins un étage de réception de signaux d'appel et de signaux de parole, un haut-parleur de restitution d'informations sonores correspondant auxdits signaux de parole reçus, un clavier à touches pour la composition de numéros d'appel, un microphone, et un étage d'émission de signaux d'appel et de signaux de parole correspondant à des informations sonores envoyées vers le microphone, caractérisé en ce qu'il comprend également un étage de réception de signaux codés distincts desdits signaux de parole reçus par un utilisateur pendant une liaison téléphonique avec au moins un correspondant, suivi de moyens de mémorisation de l'information correspondant auxdits signaux codés.

2. Appareil téléphonique selon la revendication 1, caractérisé en ce que lesdits signaux codés sont des signaux DTMF multiplexés avec lesdits signaux de parole et en ce que ledit étage de réception de signaux codés comprend un circuit de décodage desdits signaux DTMF, commandé par un microprocesseur pour relier sa sortie à l'entrée d'une mémoire interne de stockage des signaux décodés.

3. Appareil téléphonique selon la revendication 1, caractérisé en ce que lesdits signaux codés sont des signaux numériques contenus dans des trames distinctes des trames numériques contenant les signaux de parole et en ce que ledit étage de réception de signaux codés comprend un circuit de décodage desdits signaux numériques, du type GSM ou DECT notamment, commandé par un microprocesseur pour relier sa sortie à l'entrée d'une mémoire interne de stockage des signaux décodés.

4. Appareil téléphonique selon l'une des revendications 2 et 3, caractérisé en ce que le clavier comprend une touche supplémentaire pour la neutralisation dudit étage de réception de signaux codés.

5. Appareil téléphonique selon l'une des revendications 2 et 3, caractérisé en ce que le clavier comprend une touche supplémentaire pour l'activation dudit étage de réception de signaux codés.

6. Système de communication téléphonique composé :
- d'une part d'au moins deux appareils téléphoniques comprenant chacun un étage de réception de signaux d'appel et de signaux de parole, un haut-parleur de restitution d'informations sonores correspondant auxdits signaux de parole reçus, un clavier à touches pour la composition de numéros d'appel, un microphone, et un étage d'émission de signaux d'appel et de signaux de parole correspondant à des informations sonores envoyées vers le microphone ;
- d'autre part d'un dispositif de commutation centrale pour l'établissement d'une connexion téléphonique bidirectionnelle entre lesdits appareils ;
caractérisé en ce que l'un au moins des appareils comprend également un étage de réception de signaux codés distincts desdits signaux de parole reçus pendant le temps de connexion téléphonique entre lesdits appareils, suivi de moyens de mémorisation de l'information correspondant auxdits signaux codés.
